# EUROPEAN PATENT APPLICATION

(11) **EP 4 439 507 A1**
(43) Date of publication of application: **02.10.2024**
(21) Application number: 22898149.4
(22) Date of filing: 10.05.2022
(51) Int. Cl.: G07G 1/01, G07G 1/12

(54) **PRODUCT REGISTRATION DEVICE, PRODUCT REGISTRATION METHOD, AND PROGRAM RECORDING MEDIUM**

(30) Priority: 25.11.2021 JP 2021191094
(71) Applicant: Toshiba TEC Kabushiki Kaisha, Tokyo 141-8562 (JP)
(72) Inventor: AOKI, Ken, Izunokuni-shi, Shizuoka 410-2392 (JP)
(74) Representative: Bandpay & Greuter
(86) International application number: PCT/JP2022/019842
(87) International publication number: WO 2023/095364

(57) **Abstract**

A product registration apparatus includes a reception unit, an addition unit, a cancellation unit, and a determination unit. The reception unit receives product registration after a subtotal is output. The addition unit adds sales data of the product for which registration is received by the reception unit to sales data of a product for which the subtotal is output. The cancellation unit cancels the sales data of the product added by the addition unit. The determination unit waits for an instruction on whether or not to permit the product registration received after the output of the subtotal. Upon receipt of an instruction to permit the product registration, the determination unit determines the addition of the sales data performed by the addition unit. Upon receipt of an instruction not to permit the product registration, the determination unit determines the cancellation of the sales data performed by the cancellation unit.

## Description

### FIELD

Embodiments described herein relate generally to a product registration apparatus, a product registration method, and a program recording medium.

### BACKGROUND

Many product registration apparatuses allow additional registration of a product even after a customer completes registration of a product to be purchased and outputs a subtotal. Thus, an operator may, by mistake, additionally register a product other than the product to be purchased.

### CITATION LIST

### PATENT LITERATURE

Patent Literature 1: Japanese Patent No. 3607341

### SUMMARY

An object to be achieved by the embodiments is to provide a product registration apparatus that can prevent erroneous registration of a product and improve convenience by allowing an operator to select whether or not to permit additional registration of a product when the additional registration is to be performed after a subtotal is output.

### BRIEF DESCRIPTION OF THE DRAWINGS

FIG. 1 is a block diagram showing a main circuitry configuration of a product registration apparatus according to an embodiment.
FIG. 2 is a schematic diagram showing main memory areas of a main memory of the product registration apparatus.
FIG. 3 is a flowchart showing a main procedure of main information processing executed by a processor of the product registration apparatus.
FIG. 4 is a flowchart specifically showing a procedure of the last-minute cancellation process shown in FIG. 3.
FIG. 5 is a flowchart specifically showing a procedure of the designation cancellation process shown in FIG. 3.
FIG. 6 is a flowchart showing a procedure of the main information processing executed by the processor of the product registration apparatus.
FIG. 7 is a flowchart showing a procedure of the main information processing executed by the processor of the product registration apparatus.
FIG. 8 shows an example of a registration screen after the first product is registered in the product registration apparatus.
FIG. 9 shows an example of a registration screen after the second product is registered in the product registration apparatus.
FIG. 10 shows an example of a registration screen after the fourth product is registered in the product registration apparatus.
FIG. 11 shows an example of a registration screen after the fourth product was canceled at the last minute.
FIG. 12 shows an example of a registration screen after the fifth product is registered in the product registration apparatus.
FIG. 13 shows an example of a subtotal screen.
FIG. 14 shows an example of a confirmation screen.
FIG. 15 shows an example of a registration screen after a registration maintenance button on the confirmation screen is entered.
FIG. 16 shows an example of a registration screen after a cancel button on the confirmation screen is entered.
FIG. 17 is a flowchart showing another embodiment of the information processing shown in FIG. 7.

### DETAILED DESCRIPTION

In an embodiment, a product registration apparatus includes a reception unit, an addition unit, a cancellation unit, and a determination unit. The reception unit receives product registration after a subtotal is output. The addition unit adds sales data of a product for which registration is received by the reception unit to sales data of a product for which the subtotal is output. The cancellation unit cancels the sales data of the product added by the addition unit. The determination unit waits for an instruction on whether or not to permit the product registration received after the output of the subtotal. If the determination unit receives an instruction to permit the product registration, the determination unit determines the addition of the sales data performed by the addition unit. If the determination unit receives an instruction not to permit the product registration, the determination unit determines the cancellation of the sales data performed by the cancellation unit.

Hereinafter, an embodiment of a product registration apparatus will be described with reference to the drawings.

The embodiment illustrates a product registration apparatus having a registration function of handling registration of a product to be purchased by a customer and an accounting function of handling accounting of the registered product. This type of product registration apparatus is generally referred to as a POS (Point Of Sales) terminal, an electronic cash register, a cash register, etc. The product registration apparatus may be a face-to-face-service apparatus operated by a store clerk or a full-self-service apparatus operated by a customer.

### [Description of Configuration of Product Registration Apparatus]

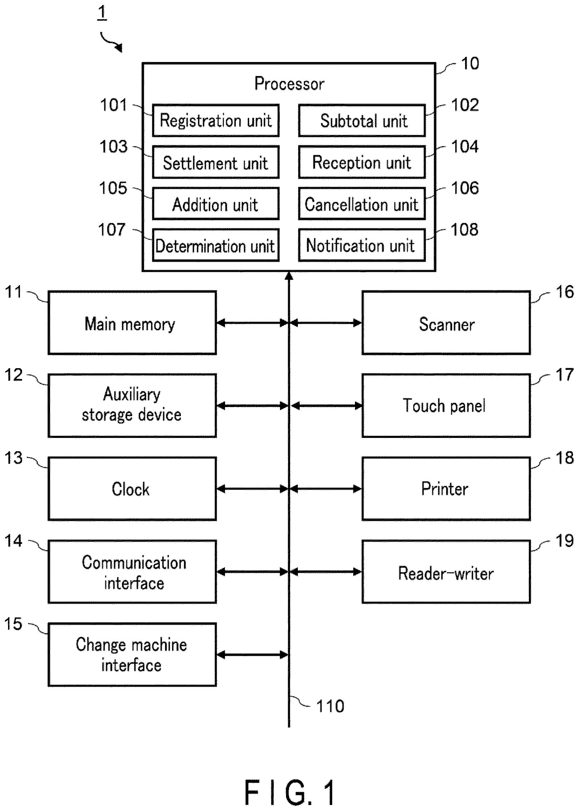

FIG. 1 is a block diagram showing a main circuitry configuration of a product registration apparatus 1. The product registration apparatus 1 includes a processor 10, a main memory 11, an auxiliary storage device 12, a clock 13, a communication interface 14, a change machine interface 15, a scanner 16, a touch panel 17, a printer 18, a reader-writer 19, a system transmission path 110, etc. The system transmission path 110 includes an address bus, a data bus, a control signal line, etc. The system transmission path 110 connects the processor 10 and other units directly or via a signal input-output circuit, and transmits data signals exchanged between the processor 10 and other units.

The product registration apparatus 1 constitutes a computer by connecting the processor 10 to the main memory 11, the auxiliary storage device 12, the clock 13, and the communication interface 14 through the system transmission path 110. The product registration apparatus 1 also connects device interfaces or devices, such as the change machine interface 15, the scanner 16, the touch panel 17, the printer 18, and the reader-writer 19, to the computer via the system transmission path 110. The devices connected to the system transmission path 110 are not limited to these devices. For example, various devices such as a keyboard, a display, and a camera can be connected thereto.

The processor 10 corresponds to a central part of the aforementioned computer. The processor 10 controls each unit to implement various functions as the product registration apparatus 1 according to an operating system or an application program. The processor 10 may be processing circuitry such as a central processing unit (CPU), a graphics processing unit (GPU), an application specific integrated circuit (ASIC), a programmable logic device (e.g., a simple programmable logic device (SPLD), a complex programmable logic device (CPLD), or a field programmable gate array (FPGA)), etc. The processor 10 is not necessarily configured as single processing circuitry. Multiple sets of processing circuitry may be combined to configure the processor 10.

The main memory 11 corresponds to a main storage part of the aforementioned computer. The main memory 11 includes a nonvolatile memory area and a volatile memory area. The main memory 11 stores an operating system or an application program in the nonvolatile memory area. The main memory 11 may store data necessary for the processor 10 to execute processing for controlling each unit in the nonvolatile or volatile memory area. The main memory 11 uses the volatile memory area as a work area in which data is rewritten as appropriate by the processor 10. The nonvolatile memory area is, for example, a read only memory (ROM). The volatile memory area is, for example, a random access memory (RAM).

The auxiliary storage device 12 corresponds to an auxiliary storage part of the aforementioned computer. For example, an electrically erasable programmable read-only memory (EEPROM), a hard disk drive (HDD), a solid state drive (SSD), or the like can be the auxiliary storage device 12. The auxiliary storage device 12 stores data used when the processor 10 performs various types of processing, data created by the processing performed by the processor 10, and the like. The auxiliary storage device 12 may store the aforementioned application program.

The clock 13 measures a date and time. The processor 10 processes the date and time measured by the clock 13 as the current date and time.

The communication interface 14 performs data communication with an external device such as a store server connected via a communication network. A store server provides a service of managing a product master file that stores product data such as a product name and a unit price in association with a product code which is product identification information of a product sold in a store. The store server may provide a service of collecting sales data of each product registered in the product registration apparatus 1 and managing various kinds of data such as sales and product inventory.

The change machine interface 15 constitutes an interface with an automatic change machine (not shown). The change machine interface 15 inputs, from the automatic change machine, data of an amount of money inserted into the automatic change machine. The change machine interface 15 outputs change data from the product registration apparatus 1 to the automatic change machine. The automatic change machine to which the change data is input automatically pays out the money corresponding to the change data as change.

The scanner 16 is an example of a reader device that reads a code symbol such as a bar code or a two-dimensional code. The scanner 16 may be a type of a scanner that reads a code symbol via a laser beam scan, or a type of a scanner that reads a code symbol from an image captured by an imaging device. The scanner 16 may be of a stationary type or of a handy type. Alternatively, the scanner 16 may include two types of scanners, a stationary one and a handy one. A bar code symbol obtained by bar-coding a product code is attached to each product. Alternatively, a two-dimensional code symbol obtained by two-dimensionally coding data including a product code is attached. The product registration apparatus 1 acquires, from the code symbol read by the scanner 16, a product code that is identification information of a product purchased by a customer.

The touch panel 17 is a device serving as both an input device and a display device. The touch panel 17 displays information to an operator of the product registration apparatus 1 and receives operation input performed by the operator.

The printer 18 prints various character strings, images, or the like on a receipt sheet, thereby issuing a receipt. For example, a thermal printer or a dot impact printer can be used as this type of printer 18.

The reader-writer 19 has a function of reading data recorded in a medium such as a card or a smartphone and a function of writing data to the medium. The card may include payment cards such as a credit card, a debit card, an electronic money card, and a prepaid card, and point cards referred to as a company point card, a common point card, and the like. The reader-writer 19 may be any one of a magnetic device, a contact-type device, or a non-contact-type device, and may include multiple types of devices.

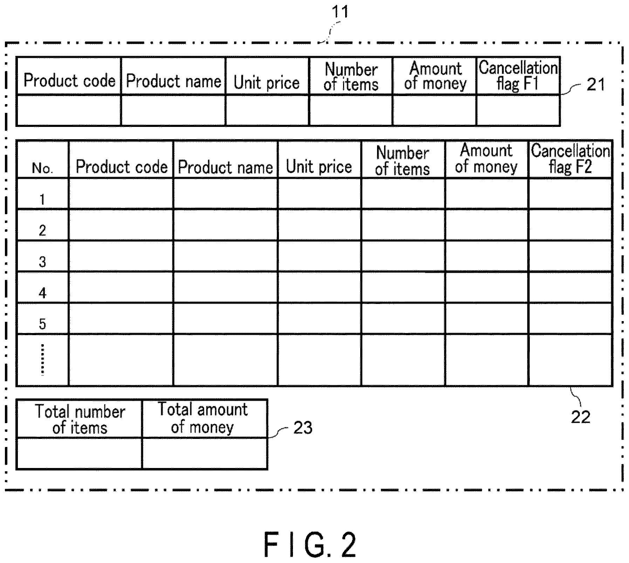

In the product registration apparatus 1 having such a configuration, the processor 10 functions as a registration unit 101, a subtotal unit 102, a settlement unit 103, a reception unit 104, an addition unit 105, a cancellation unit 106, a determination unit 107, a notification unit 108, etc. As illustrated in the schematic diagram of FIG. 2, the product registration apparatus 1 uses part of the volatile memory area of the main memory 11 as areas for a latest memory 21, a detail memory 22, and a total memory 23.

The registration unit 101 has a function of processing registration of a product to be purchased by a customer. The subtotal unit 102 has a function of outputting a subtotal of a product registered by the registration unit 101. The settlement unit 103 has a function of receiving payment for the subtotal output from the subtotal unit 102 and settling a transaction with the customer. The subtotal can also be referred to as a "total".

The reception unit 104 has a function of receiving the product registration performed by the registration unit 101 after the subtotal is output by the subtotal unit 102. The addition unit 105 has a function of adding sales data of the product for which registration is received by the reception unit 104 to sales data of the product for which the subtotal is output. The cancellation unit 106 has a function of cancelling the sales data of the product added by the addition unit 105. The determination unit 107 has a function of waiting for an instruction of whether or not to permit the product registration received by the reception unit 104 after the output of the subtotal, determining the addition of the sales data performed by the addition unit 105 when the determination unit 107 receives an instruction to permit the product registration, and determining the cancellation of the sales data performed by the cancellation unit 106 when the determination unit 107 receives an instruction not to permit the product registration. The notification unit 108 has a function of notifying an operator that the sales data is canceled when the cancellation of the sales data is determined by the determination unit 107.

The functions of the registration unit 101, the subtotal unit 102, the settlement unit 103, the reception unit 104, the addition unit 105, the cancellation unit 106, the determination unit 107, and the notification unit 108 are all realized by the information processing executed by the processor 10 according to a registration program. The registration program is a kind of application program stored in the main memory 11 or the auxiliary storage device 12. A method of installing the registration program in the main memory 11 or the auxiliary storage device 12 is not particularly limited. It is possible to install the registration program in the main memory 11 or the auxiliary storage device 12 by recording the registration program on a removable recording medium or distributing the registration program through communication via a communication network. The recording medium may be in any form as long as it can store a program, as in a CD-ROM or a memory card, and allows the program to be read by an apparatus.

A description with reference to FIG. 2 will be provided next.

The latest memory 21 is an area for storing at least a product code, a product name, a quantity, a unit price, an amount of money, and a cancellation flag F1 of the latest registered product. The cancellation flag F1 is 1-bit data for identifying whether or not the latest registered product is canceled. In the embodiment, the cancellation flag F1 is set to "0" in a case where the registered product is not canceled, and the cancellation flag F1 is set to "1" in a case where the registered product is canceled.

The detail memory 22 is an area for storing a product code, a product name, a quantity, a unit price, an amount of money, and a cancellation flag F2 of a product registered before the latest registered product in association with a serial number (No.) starting from "1". The cancellation flag F2 is 1-bit data for identifying whether or not the corresponding registered product is canceled. In the embodiment, the cancellation flag F2 is set to "0" in a case where the registered product is not canceled, and the cancellation flag F2 is set to "1" in a case where the registered product is canceled.

The total memory 23 is an area for storing the total number and the total amount of money of registered products.

### [Description of Operation of Product Registration Apparatus]

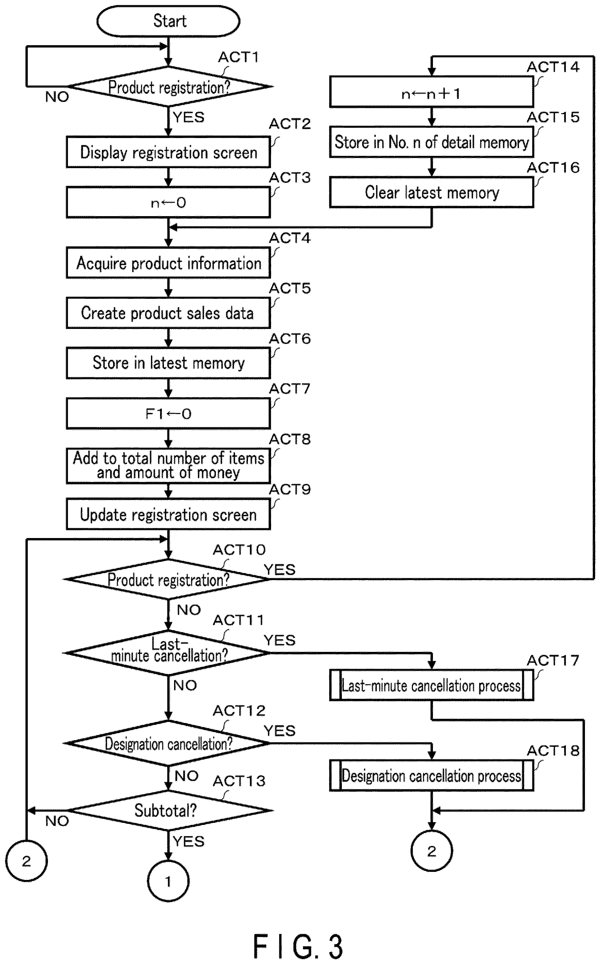

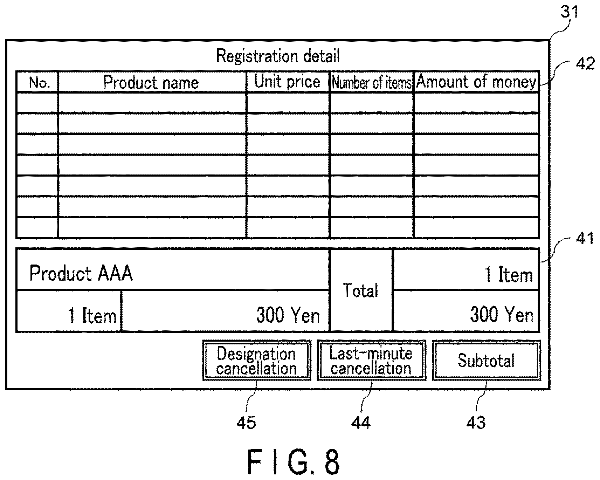

FIGS. 3 to 7 are flowcharts showing main procedures of the main information processing executed by the processor 10 according to the registration program. FIGS. 8 to 16 show examples of screens displayed on the touch panel 17, which is a display device of the product registration apparatus 1. Hereinafter, main operations of the product registration apparatus 1 will be described with reference to the respective drawings. It is noted that the operations described below are examples. The procedures of the operations or the content of the processing can be changed as appropriate, provided that the same effect can be achieved. The layout, image, text, and the like of each screen are not limited to those shown in the drawings.

As ACT 1 in FIG. 3, the processor 10 waits for a product to be registered. An operation for registering a product is performed by an operator of the product registration apparatus 1. In one embodiment, the operator is a store clerk. If the product registration apparatus 1 is a full-self-service apparatus, the operator is a customer. When a customer who finishes shopping tells a store clerk that s/he wishes to do the payment, the store clerk scans a bar code attached to the product to be purchased by the customer with the scanner 16. If a bar code is not attached to a product, the store clerk displays a list of products without a bar code on the touch panel 17, and selects the product to be purchased by the customer from the list.

When the bar code is scanned, the processor 10 acquires a product code from the bar code. When a product is selected from the list of products without a bar code, the processor 10 acquires a product code preset for the selected product. In this manner, when the product code of the first product purchased by the customer is acquired, the processor 10 determines that the product is registered. The processor 10 proceeds to ACT 2. As ACT 2, the processor 10 switches the screen of the touch panel 17 to a registration screen.

FIG. 8 shows an example of a registration screen 31. As shown in the figure, the registration screen 31 includes a latest display section 41 and a detail display section 42. The registration screen 31 displays button images of a subtotal button 43, a last-minute-cancel button 44, and a designation cancel button 45. The button images displayed on the registration screen 31 are not limited to the subtotal button 43, the last-minute-cancel button 44, and the designation cancel button 45. Button images having other functions may be displayed.

The latest display section 41 is an area for displaying the product name, the number of items, and the amount of money of the latest registered product, and the total number of items and the total amount of money of all registered products. The detail display section 42 is an area for displaying the product name, the unit price, the number of items, and the amount of money of the product registered before the latest registered product in the order of registration in the form of a list in association with a series of numbers. At the time of ACT 2, no data is displayed in either of the latest display section 41 or the detail display section 42.

The subtotal button 43 is an operating element for instructing output of a subtotal of registered products. The last-minute-cancel button 44 is an operating element for instructing cancellation of the registered product displayed on the latest display section 41. The designation cancel button 45 is an operating element for instructing cancellation of any of the registered products displayed in the detail display section 42.

As ACT 3, the processor 10 that controls the display on the registration screen 31 resets a number counter n to "0". For example, the number counter n is incorporated in the processor 10. As ACT 4, the processor 10 acquires product information such as a product name and a unit price of a registered product. Specifically, the processor 10 makes an inquiry to a store server using the product code input through the operation of registering products. In response to the inquiry, the store server reads the product information, which is the product name and the unit price of the product identified by the product code, from a product master file and transmits it to the product registration apparatus 1 that is the inquiry source. In this manner, the processor 10 acquires the product information of the registered product.

As ACT 5, the processor 10 creates product sales data of the registered product. The product sales data is a data record including the product code, the product name, the unit price, the number of items, and the amount of money of the registered product. The number of items is usually "1". The amount of money is calculated by multiplying the unit price by the number of items. The amount of money may include a tax amount.

As ACT 6, the processor 10 describes the product code, the product name, the unit price, the number of items, and the amount of money included in the product sales data in the latest memory 21. Then, as ACT 7, the processor 10 sets the cancellation flag F1 of the latest memory 21 to "0" indicating non-cancellation. As ACT 8, the processor 10 adds the number of items and the amount of money included in the product sales data to the total number of items and the total amount of money in the total memory 23, respectively. Then, as ACT 9, the processor 10 updates the registration screen based on the latest memory 21, the detail memory 22, and the total memory 23.

FIG. 8 shows the registration screen 31 after one product AAA having a unit price of 300 yen is registered as the first product to be purchased by the customer. As shown in FIG. 8, the latest display section 41 displays the product name, the number of items, and the amount of money of the product AAA stored in the latest memory 21 in ACT 6, and also displays the total number of items "1" and the total amount of money "300" in the total memory 23 including the number of items and the amount of money of the product AAA added thereto in ACT 8.

As ACT 10, the processor 10 that updates the registration screen confirms whether or not the next product registration is performed. If no product is registered, the processor 10 proceeds to ACT 11. As ACT 11, the processor 10 confirms whether or not the last-minute-cancel button 44 is entered. If the last-minute-cancel button 44 is not entered, the processor 10 proceeds to ACT 12. As ACT 12, the processor 10 confirms whether or not the designation cancel button 45 is entered. If the designation cancel button 45 is not entered, the processor 10 proceeds to ACT 13. As ACT 13, the processor 10 confirms whether or not the subtotal button 43 is entered. If the subtotal button 43 is not entered, the processor 10 returns to ACT 10.

The processor 10 waits for a product to be registered or for the last-minute-cancel button 44, the designation cancel button 45, or the subtotal button 43 to be entered in ACT 10 through ACT 13. For example, when a discount button (not shown) is entered in this standby state, the processor 10 executes a process of discounting the amount of money stored in the latest memory 21. In this manner, other processes related to product transaction can also be executed in the standby state during ACT 10 to ACT 13.

When the processor 10 detects registration of a product as a result of scanning of a bar code or selection of a product from a list of products without a bar code in the standby state during ACT 10 to ACT 13, the processor 10 proceeds to ACT 14. As ACT 14, the processor 10 counts up the number counter n by "1". Then, as ACT 15, the processor 10 describes the data of the product code, the product name, the unit price, the number of items, the amount of money, and the cancellation flag F1 stored in the latest memory 21 in an area with a serial number corresponding to the number counter n in the detail memory 22. Thus, the cancellation flag F1 is stored as the cancellation flag F2.

As ACT 16, the processor 10 clears the latest memory 21. Then, the processor 10 proceeds to ACT 4 described above. The processor 10 performs ACT 4 and the subsequent processing in the same manner as described above.

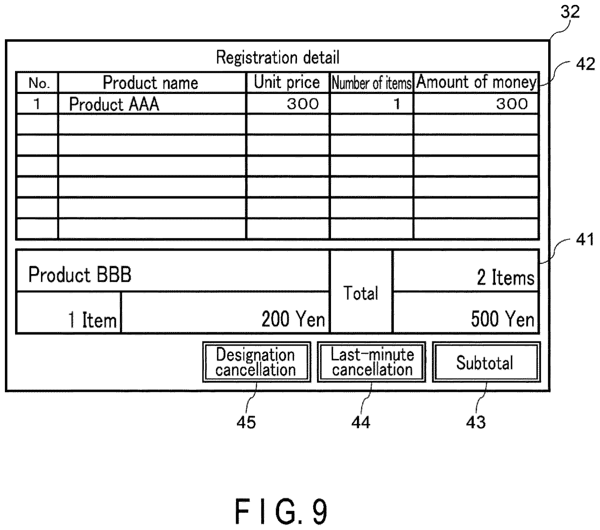

FIG. 9 shows an example of a registration screen 32 in which one product BBB having a unit price of 200 yen is registered as the second product to be purchased by the customer. As shown in FIG. 9, the product name, the unit price, the number of items, and the amount of money of the product AAA stored in the detail memory 22 are displayed in the area No. 1 of the detail display section 42. Also, the latest display section 41 displays the product name, the number of items, and the amount of money of the product BBB stored in the latest memory 21 in ACT 6, and also displays the total number of items "2" and the total amount of money "500" in the total memory 23 including the number of items and the amount of money of the product BBB added thereto in ACT 8.

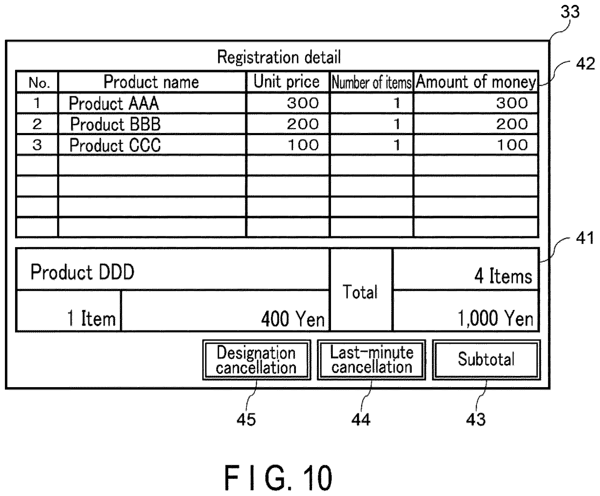

FIG. 10 shows an example of a registration screen 33 in which one product CCC having a unit price of 100 yen is further registered as the third product and one product DDD having a unit price of 400 yen is subsequently registered as the fourth item. As shown in FIG. 10, the product name, the unit price, the number of items, and the amount of money of each of the product AAA, the product BBB, and the product CCC stored in the detail memory 22 are displayed in the areas Nos. 1 to 3 of the detail display section 42. Also, the latest display section 41 displays the product name, the number of items, and the amount of money of the product DDD stored in the latest memory 21 in ACT 6, and also displays the total number of items "4" and the total amount of money "1,000" in the total memory 23 including the number of items and the amount of money of the product DDD added thereto in ACT 8.

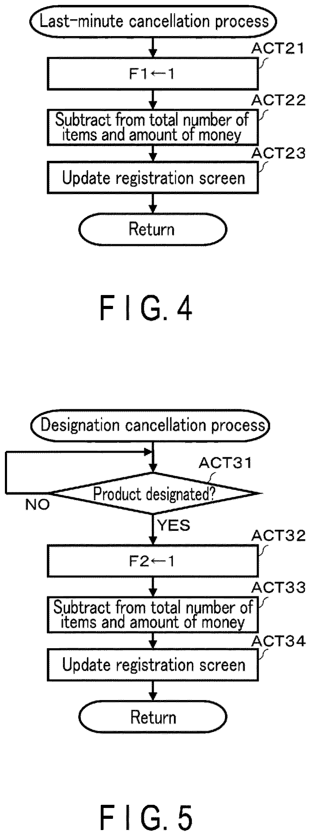

Let us assume that the customer cancels the purchase of the fourth product DDD. In this case, the store clerk as an operator touches and enters the last-minute-cancel button 44. When the processor 10 in the standby state during ACT 10 to ACT 13 detects, through a signal from the touch panel 17, entry of the last-minute-cancel button 44, the processor 10 executes the last-minute cancellation process shown in FIG. 4.

As ACT 21, the processor 10 sets the cancellation flag F1 of the latest memory 21 to "1" indicating completion of cancellation. In addition, as ACT 22, the processor 10 subtracts the number of items and the amount of money in the latest memory 21 from the total number of items and the total amount of money in the total memory 23. Then, as ACT 23, the processor 10 updates the registration screen.

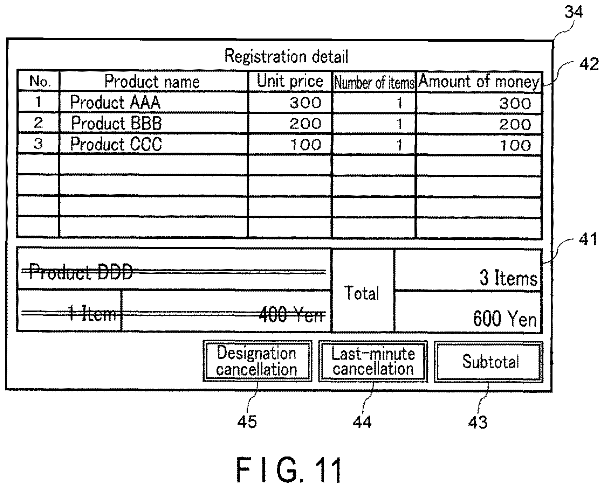

FIG. 11 shows an example of a registration screen 34 updated by the last-minute cancellation process for the product DDD. As information indicating execution of cancellation, a strike-through is shown on the product name, the number of items, and the amount of money of the product DDD displayed in the latest display section 41 on the registration screen 34, as shown in the figure. In addition, the total number of items and the total amount of money are the values after subtraction of the number of items and the amount of money of the product DDD.

In ACT 23, the processor 10 after updating the registration screen returns to the standby state during ACT 10 to ACT 13 described above. Thus, in a case where a new product is subsequently registered, the processor 10 performs ACT 14 to ACT 16 and then performs ACT 4 to ACT 9. That is, the processor 10 describes the product code, the product name, the unit price, the number of items, the amount of money, and the cancellation flag F1 of the product DDD, which has the cancellation flag F1 set to "1" by the last-minute cancellation process, in an area with a serial number corresponding to the number counter n in the detail memory 22. The processor 10 describes the product code, the product name, the unit price, the number of items, and the amount of money that are product sales data of the newly registered product in the latest memory 21. At this time, the processor 10 sets the cancellation flag F1 of the latest memory 21 to "0". The processor 10 adds the number of items and the amount of money of the newly registered product to the total number of items and the total amount of money in the total memory 23, respectively. Thereafter, the processor 10 updates the registration screen based on the latest memory 21, the detail memory 22, and the total memory 23.

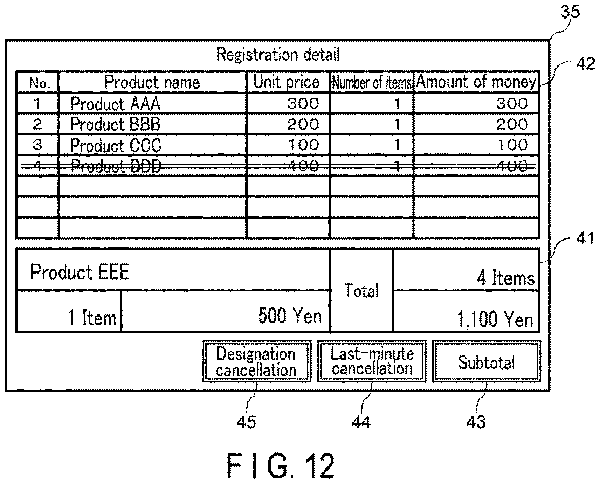

FIG. 12 shows a registration screen 35 in which one product EEE having a unit price of 500 yen is registered as the fifth item after the last-minute cancellation is performed for the fourth product DDD. As shown in the figure, the product name, the unit price, the number of items, and the amount of money of each of the product AAA, the product BBB, the product CCC, and the product DDD stored in the detail memory 22 are displayed in the areas Nos. 1 to 4 of the detail display section 42. However, since the cancellation flag F2 is set to "1" for the product DDD, a strike-through is shown on the product name, the unit price, etc., of the product DDD as information indicating cancellation of the product DDD. The latest display section 41 displays the product name, the number of items, and the amount of money of the product EEE stored in the latest memory 21 in ACT 6, and also displays the total number of items "4" and the total amount of money "1,100" in the total memory 23 including the number of items and the amount of money of the product EEE added thereto in ACT 8.

Let us assume that the customer cancels the purchase of, for example, the second product BBB. In this case, the store clerk as an operator touches and enters the designation cancel button 45. When the processor 10 in the standby state during ACT 10 to ACT 13 detects, through a signal from the touch panel 17, entry of the designation cancel button 45, the processor 10 executes the designation cancellation process shown in FIG. 5.

As ACT 31, the processor 10 waits for a canceled product to be designated from among the registered products displayed in the detail display section 42. The operator designates a canceled product by touching the product name, etc., of the product BBB displayed in the detail display section 42. In response to the entry of the designation cancel button 45, cancel buttons may be displayed in association with all the product names displayed in the detail display section 42, so that the operator may designate a canceled product by touching a cancel button associated with the product name of the product BBB.

When a canceled product is designated, the processor 10 proceeds to ACT 32. As ACT 32, the processor 10 sets the cancellation flag F2 of the canceled product stored in the detail memory 22 to "1". In addition, as ACT 33, the processor 10 subtracts the number of items and the amount of money of the canceled product from the total number of items and the total amount of money in the total memory 23. Then, as ACT 34, the processor 10 updates the registration screen.

Although not illustrated, as information indicating execution of cancellation, a strike-through is shown on the product name, the unit price, the number of items, and the amount of money of the product BBB, which has the cancellation flag F2 changed to "1", in the detail display section 42 on the registration screen updated through ACT 34. In addition, the total number of items and the total amount of money displayed in the latest display section 41 are values after subtraction of the number of items and the amount of money of the product BBB.

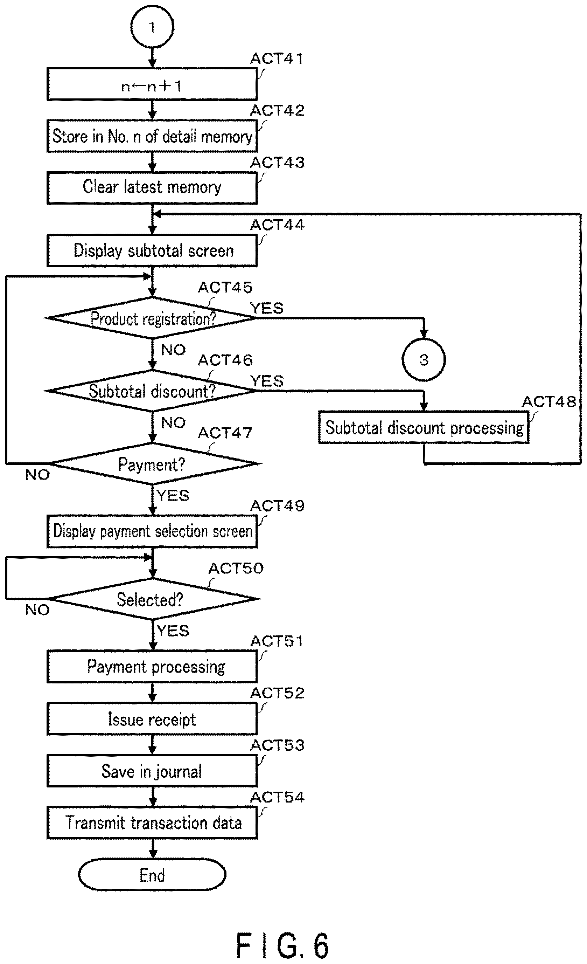

When the customer finishes registering the products to be purchased, the operator touches and enters the subtotal button 43. When the processor 10 in the standby state during ACT 10 to ACT 13 detects, through a signal from the touch panel 17, entry of the subtotal button 43, the processor 10 proceeds to ACT 41 in FIG. 6.

As ACT 41, the processor 10 counts up the number counter n by "1". Then, as ACT 42, the processor 10 describes the data of the product code, the product name, the unit price, the number of items, the amount of money, and the cancellation flag F1 stored in the latest memory 21 in an area with a serial number corresponding to the number counter n in the detail memory 22. Thus, the cancellation flag F1 is stored as the cancellation flag F2.

As ACT 43, the processor 10 clears the latest memory 21. In addition, as ACT 44, the processor 10 sets the screen of the touch panel 17 to a subtotal screen.

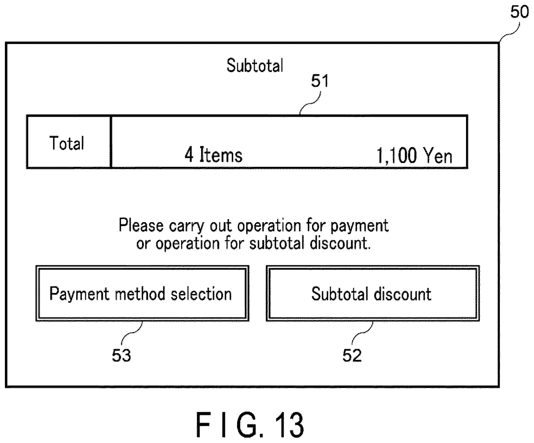

FIG. 13 shows an example of a subtotal screen 50 in which the subtotal button 43 on the registration screen 35 shown in FIG. 12 is entered by touch. As shown in the figure, the subtotal screen 50 includes a subtotal display section 51. The subtotal screen 50 displays button images of a subtotal discount button 52 and a payment method selection button 53. The total number of items "4" and the total amount of money "1,100" stored in the total memory 23 are displayed in the subtotal display section 51.

The subtotal discount button 52 is an operating element for instructing discount of the total amount of money. The payment method selection button 53 is an operating element for instructing selection of a method of payment of the total amount of money.

As ACT 45, the processor 10 that controls the display of the subtotal screen 50 confirms whether or not a product is registered. If no product is registered, the processor 10 proceeds to ACT 46. As ACT 46, the processor 10 confirms whether or not the subtotal discount button 52 is entered. If the subtotal discount button 52 is not entered, the processor 10 proceeds to ACT 47. As ACT 47, the processor 10 confirms whether or not the payment method selection button 53 is entered. If the payment method selection button 53 is not entered, the processor 10 returns to ACT 45. The processor 10 waits for a product to be registered or the subtotal discount button 52 or the payment method selection button 53 to be entered in ACT 45 through ACT 47.

For example, in a case where the customer presents a ten-percent off coupon for the total, the operator touches and enters the subtotal discount button 52. When the processor 10 in the standby state during ACT 45 to ACT 47 detects, through a signal from the touch panel 17, entry of the subtotal discount button 52, the processor 10 executes a subtotal discount process as ACT 48. The subtotal discount process is, for example, a process of displaying a screen for inputting a discount rate on the touch panel 17 and discounting the total amount of money stored in the total memory 23 at the discount rate input by the operator. When the processor 10 finishes the subtotal discount process, the processor 10 returns to ACT 44. That is, the processor 10 changes the amount of money displayed in the subtotal display section 51 on the subtotal screen 50 to the discounted amount of money. Thereafter, the processor 10 returns to the standby state during ACT 45 to ACT 47.

The operator who confirms completion of the registration of all the products to be purchased by the customer touches and enters the payment method selection button 53. When the processor 10 in the standby state during ACT 45 to ACT 47 detects, through a signal from the touch panel 17, entry of the payment method selection button 53, the processor 10 sets, as ACT 49, the screen of the touch panel 17 to a payment method selection screen. The payment method selection screen is a screen for allowing the operator to select any one of various payment methods such as cash, a credit card, and electronic money. For example, payment buttons such as a cash button for selecting cash payment, a credit button for selecting credit card payment, and an electronic money button for selecting electronic money payment are displayed on the payment method selection screen. The operator touches and enters a payment button according to the payment method desired by the customer.

As ACT 50, the processor 10 that controls the display of the payment selection screen waits for any one of the payment methods to be selected. When the processor 10 detects, through a signal from the touch panel 17, entry of any one of the payment buttons, the processor 10 determines that a payment method corresponding to the payment button is selected. As ACT 51, the processor 10 executes payment processing according to the payment method.

In the case of cash payment, for example, the processor 10 calculates the amount of change by subtracting the total amount of money from the amount of money deposited, thereby establishing settlement by cash. In the case of credit card payment, for example, the processor 10 performs card authentication based on the credit card data read by the reader-writer 19, and establishes settlement by a credit card on the condition that the card authentication is approved. In the case of electronic money payment, for example, the processor 10 deducts the total amount of money from the balance of the electronic money read from an electronic money medium by the scanner 16 or the reader-writer 19, thereby establishing settlement by electronic money.

When the processor 10 completes the payment processing, the processor 10 controls the printer 18 to issue a transaction receipt as ACT 52. Further, as ACT 53, the processor 10 saves the data stored in the detail memory 22 in a journal file. The journal file is formed in the auxiliary storage device 12.

As ACT 54, the processor 10 creates transaction data with the data having the cancellation flag F2 as "0" among the data of the registered products stored in the detail memory 22. Then, the processor 10 controls the communication interface 14 to transmit the transaction data to the store server. With the aforementioned processing, the processor 10 ends a series of processes from registration to accounting of the products purchased by the customer.

When the subtotal screen 50 is displayed on the touch panel 17, that is, when the subtotal is output, the customer may request addition of a product to be purchased. Alternatively, the store clerk may notice that there is a product omitted from the registration. In such cases, the store clerk registers the product. That is, in a case where a bar code is attached to the product, the store clerk scans the bar code with the scanner 16. If no bar code is attached to the product, the store clerk displays a list of the products without a bar code on the touch panel 17, and selects the product to be purchased by the customer from the list.

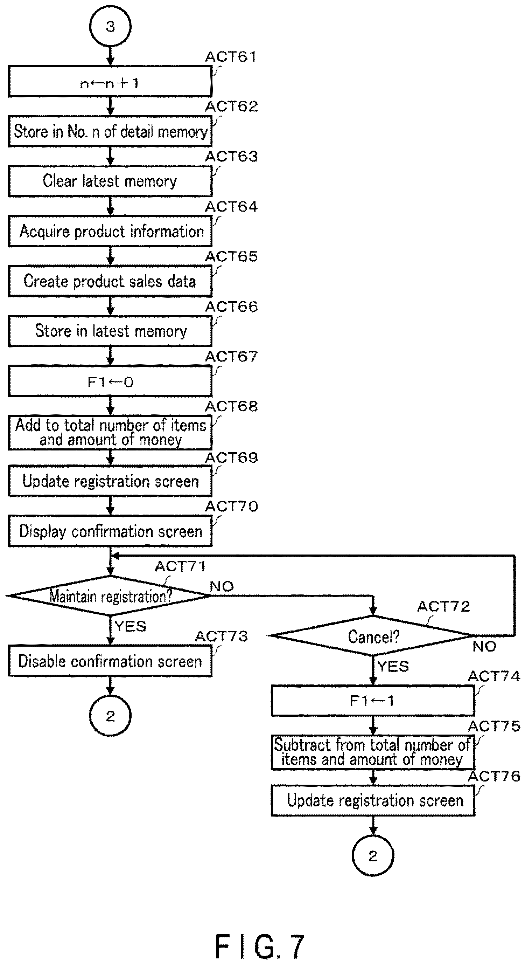

When the processor 10 in the standby state during ACT 45 to ACT 47 detects registration of a product as a result of scanning of a bar code or selection of a product from a list of products without a bar code, the processor 10 proceeds to ACT 61 in FIG. 7.

As ACT 61, the processor 10 counts up the number counter n by "1". Then, as ACT 62, the processor 10 describes the data of the product code, the product name, the unit price, the number of items, the amount of money, and the cancellation flag F1 stored in the latest memory 21 in an area with a serial number corresponding to the number counter n in the detail memory 22. Then, as ACT 63, the processor 10 clears the latest memory 21.

When the processor 10 completes ACT 61 to ACT 63, the processor 10 executes, as ACT 64 to ACT 69, the same processing as ACT 4 to ACT 9 described above. That is, as ACT 64, the processor 10 acquires product information such as a product name and a unit price of a registered product. As ACT 65, the processor 10 creates product sales data of the registered product. As ACT 66, the processor 10 describes the product code, the product name, the unit price, the number of items, and the amount of money included in the product sales data in the latest memory 21. At this time, the processor 10 sets the cancellation flag F1 of the latest memory 21 to "0" as ACT 67. As ACT 68, the processor 10 adds the number of items and the amount of money included in the product sales data to the total number of items and the total amount of money in the total memory 23, respectively. Then, as ACT 69, the processor 10 updates the registration screen based on the data in the latest memory 21, the detail memory 22, and the total memory 23. As a result of the update, the product name, the unit price, the number of items, the amount of money, etc., of each product registered before the entry of the subtotal button 43 are displayed in the form of a list in the detail display section 42. The product name, the number of items, and the amount of money of the product added after the entry of the subtotal button 43 are displayed in the latest display section 41. The total number of items and the total amount of money of all the registered products are also displayed in the latest display section 41.

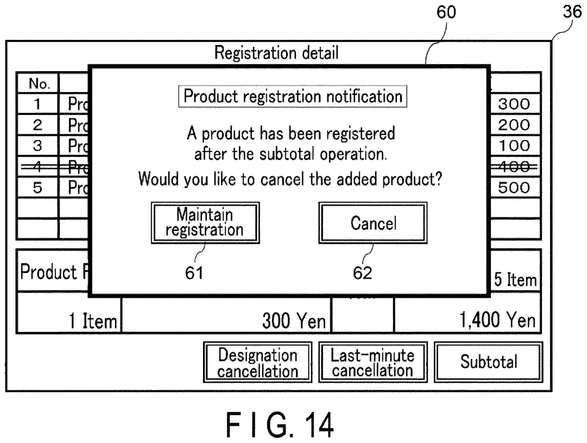

As ACT 70, the processor 10 that controls the update of the registration screen controls a confirmation screen 60 to be displayed as being superimposed on the registration screen (see FIG. 14). That is, the processor 10 controls the confirmation screen 60 to be displayed in a pop-up window.

FIG. 14 shows an example of the confirmation screen 60 when a product FFF having a unit price of 300 yen is additionally registered in the state where the subtotal screen 50 shown in FIG. 13 is displayed on the touch panel 17. As shown in the figure, the confirmation screen 60 displayed is superimposed on the registration screen 36. The registration screen 36 will be described later. On the confirmation screen 60, button images of a registration maintenance button 61 and a cancel button 62 are displayed together with a message for confirming with the operator whether to maintain or cancel the registration of the registered product after the output of the subtotal. The registration maintenance button 61 is an operating element for instructing maintenance of the product registration after the output of the subtotal. The cancel button 62 is an operating element for instructing cancellation of the product registration after the output of the subtotal.

As ACT 71, the processor 10 that controls the display of the confirmation screen 60 confirms whether or not the registration maintenance button 61 is entered. If the registration maintenance button 61 is not entered, the processor 10 proceeds to ACT 72. As ACT 72, the processor 10 confirms whether or not the cancel button 62 is entered. If the cancel button 62 is not entered, either, the processor 10 returns to ACT 71. The processor 10 waits for the registration maintenance button 61 to be entered in ACT 71 or waits for the cancel button 62 to be entered in ACT 72.

If the product registration performed after the output of the subtotal is to be maintained, the operator touches and enters the registration maintenance button 61. When the processor 10 detects, through a signal from the touch panel 17, entry of the registration maintenance button 61, the processor 10 proceeds to ACT 73. As ACT 73, the processor 10 disables the confirmation screen 60. As a result, only the registration screen 36 updated by ACT 69 remains on the touch panel 17.

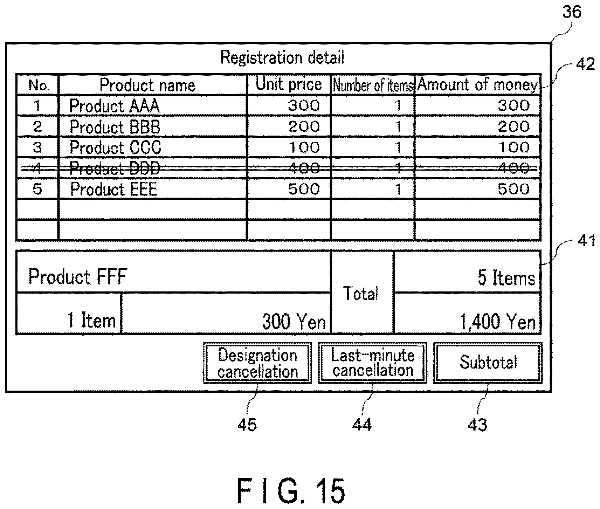

FIG. 15 shows an example of the registration screen 36 after the operator touches and enters the registration maintenance button 61 in the state where the confirmation screen 60 shown in FIG. 14 is displayed. As shown in the figure, the product name, the unit price, the number of items, and the amount of money of the product EEE registered immediately before the subtotal button 43 is touched and entered are added to the detail display section 42 on the registration screen 36. The product name, the number of items, and the amount of money of the product FFF additionally registered after the output of the subtotal is displayed in the latest display section 41. The total number of items and the total amount of money of the registered products including the product FFF are also displayed in the latest display section 41.

The processor 10 that disables the confirmation screen 60 returns to the standby state during ACT 10 to ACT 13 in FIG. 3. Thus, when the operator touches and enters the subtotal button 43, the processor 10 executes ACT 41 and the subsequent processing in FIG. 6 in the same manner as described above. Also, when the operator performs product registration, the processor 10 executes ACT 14 to ACT 16 and further ACT 4 to ACT 9 described in FIG. 3 in the same manner as described above. Needless to say, the processor 10 also executes the last-minute cancellation process or the designation cancellation process described above in a case where the operator touches and enters the last-minute-cancel button 44 or the designation cancel button 45.

Referring back to FIG. 7, a further description will be given.

If the product registration after the output of the subtotal is to be canceled, the operator touches and enters the cancel button 62. When the processor 10 detects, through a signal from the touch panel 17, entry of the cancel button 62, the processor 10 proceeds to ACT 74. As ACT 74, the processor 10 sets the cancellation flag F1 of the latest memory 21 to "1". In addition, as ACT 75, the processor 10 subtracts the number of items and the amount of money in the latest memory 21 from the total number of items and the total amount of money in the total memory 23, respectively. Then, as ACT 76, the processor 10 disables the confirmation screen 60 and updates the registration screen.

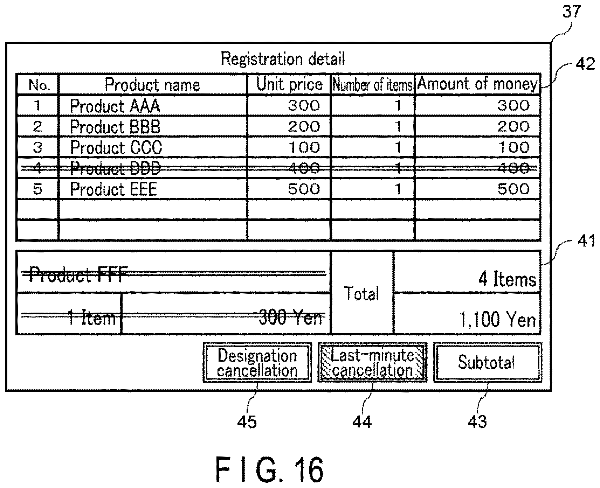

FIG. 16 shows an example of a registration screen 37 after the operator touches and enters the cancel button 62 in the state where the confirmation screen 60 shown in FIG. 14 is displayed. As shown in the figure, the product name, the unit price, the number of items, and the amount of money of the product EEE registered immediately before the subtotal button 43 is touched and entered are added to the detail display section 42 on the registration screen 37. The product name, the number of items, and the amount of money of the product FFF additionally registered after the output of the subtotal is displayed in the latest display section 41. However, since the cancellation flag F1 in the latest memory 21 is set to "1", a strike-through indicating cancellation is shown on the product name, the number of items, and the amount of money of the product FFF. The total number of items and the total amount of money in the latest display section 41 return to the values observed immediately before the subtotal button 43 is touched and entered. Since the registered product stored in the latest memory 21 is canceled, last-minute cancellation cannot be performed. Thus, the last-minute-cancel button 44 is grayed out and is inoperable.

The processor 10 that updates the registration screen returns to the standby state during ACT 10 to ACT 13 in FIG. 3. Thus, when the operator touches and enters the subtotal button 43, the processor 10 executes ACT 41 and the subsequent processing in FIG. 6 in the same manner as described above. Also, when the operator performs product registration, the processor 10 executes ACT 14 to ACT 16 and further ACT 4 to ACT 9 described in FIG. 3 in the same manner as described above. The processor 10 also executes the designation cancellation process described above in a case where the operator touches and enters the designation cancel button 45.

The above descriptions complete explanation of the main operations of the product registration apparatus 1.

The processor 10 implements the function as the registration unit 101 by executing ACT 4 to ACT 8 and ACT 14 to ACT 16 in FIG. 3. The processor 10 implements the function as the subtotal unit 102 by executing ACT 44 in FIG. 6. The processor 10 implements the function as the settlement unit 103 by executing ACT 49 to ACT 54 in FIG. 6. The processor 10 implements the function as the reception unit 104 by executing ACT 45 in FIG. 6. The processor 10 implements the function as the addition unit 105 by executing ACT 61 to ACT 68 in FIG. 7. The processor 10 implements the function as the cancellation unit 106 by executing ACT 74 and ACT 75 in FIG. 7. The processor 10 implements the function as the determination unit 107 by executing ACT 70 to ACT 73 and ACT 76 in FIG. 7. The processor 10 implements the function as the notification unit 108 by causing the latest display section 41 to display a strike-through in ACT 76 in FIG. 7.

### [Description of Effects of Product Registration Apparatus]

According to the product registration apparatus 1 having the functions as the reception unit 104, the addition unit 105, the cancellation unit 106, and the determination unit 107 described above, it is possible to additionally register a product even after registration of the products to be purchased by a customer is completed and a subtotal is output. When a product is additionally registered, the confirmation screen 60 is displayed to prompt an operator to select whether to maintain or cancel the additional registration. Thus, in a case where a store clerk additionally registers a product by mistake, for example, the store clerk who notices the mistake can cancel the additional registration before the additional registration is determined. As a result, it is possible to reliably prevent a product from being registered by mistake, leading to improved convenience.

Further, in the product registration apparatus 1, after the addition unit 105 adds sales data, the determination unit 107 controls the confirmation screen 60 to be displayed on the touch panel 17 and waits for an instruction as to whether or not to permit product registration. Thus, after the registration maintenance button 61 on the confirmation screen 60 is entered, the processor 10 can determine the addition of the sales data merely by disabling the confirmation screen 60. It is considered that the frequency is low that a store clerk additionally registers a product other than registration targets by mistake after a subtotal is output. Therefore, according to the product registration apparatus 1, it is possible to efficiently process the additional product registration after the output of a subtotal.

Moreover, in the product registration apparatus 1, the registration maintenance button 61 instructing to permit product registration and the cancel button 62 instructing not to permit product registration are arranged side by side on the confirmation screen 60 as a single screen. Therefore, according to the product registration apparatus 1, it is possible to provide an interface that can be easily operated by an operator who needs to enter the registration maintenance button 61 or the cancel button 62.

Also, in a case where the additional registration of a product performed after the output of a subtotal is canceled, the product registration apparatus 1 shows a strike-through on the product name, etc., of the additionally registered product. Therefore, according to the product registration apparatus 1, it is possible to visually recognize that the additional registration is surely canceled.

### [Other Embodiments]

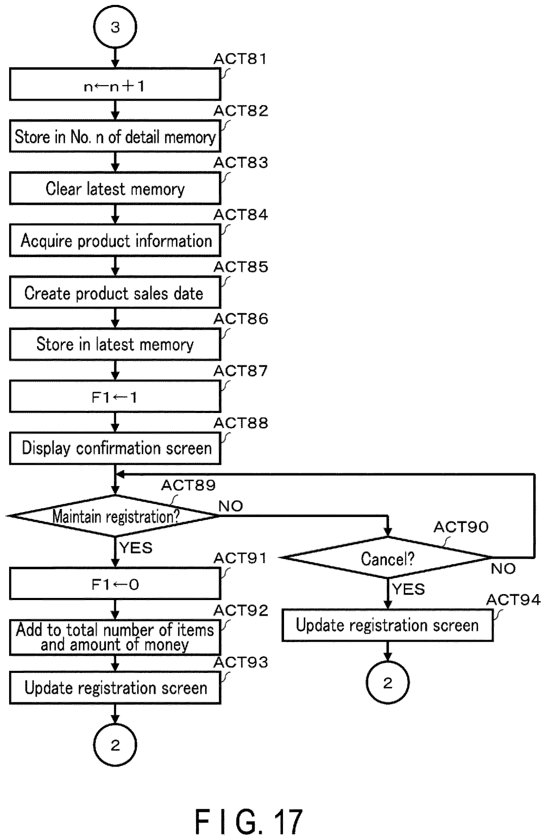

FIG. 17 is a flowchart showing another embodiment of the information processing shown in FIG. 7.

When the processor 10 detects registration of a product as a result of scanning of a bar code or selection of a product from a list of products without a bar code in the standby state during ACT 45 to ACT 47 in FIG. 6, the processor 10 proceeds to ACT 81 in FIG. 17. As ACT 81 to ACT 86, the processor 10 executes the same processing as ACT 61 to ACT 66 in FIG. 7.

Upon completion of ACT 86, the processor 10 sets the cancellation flag F1 of the latest memory 21 to "1" as ACT 87. Thereafter, as ACT 88, the processor 10 controls the confirmation screen 60 to be displayed on the touch panel 17. Then, the processor 10 waits for the registration maintenance button 61 to be entered as ACT 89 or waits for the cancel button 62 to be entered as ACT 90.

When the processor 10 detects entry of the registration maintenance button 61 in the standby state during ACT 89 and ACT 90, the processor 10 proceeds to ACT 91. As ACT 91, the processor 10 changes the cancellation flag F1 in the latest memory 21 to "0". As ACT 92, the processor 10 adds the number of items and the amount of money in the latest memory 21 to the total number of items and the total amount of money in the total memory 23, respectively. Then, as ACT 93, the processor 10 disables the confirmation screen 60 and updates the registration screen. Thereafter, the processor 10 enters the standby state during ACT 10 to ACT 13 in FIG. 3.

On the other hand, when the processor 10 detects entry of the cancel button 62 in the standby state during ACT 89 and ACT 90, the processor 10 proceeds to ACT 94. As ACT 94, the processor 10 disables the confirmation screen 60 and updates the registration screen. Thereafter, the processor 10 enters the standby state during ACT 10 to ACT 13 in FIG. 3.

In the second embodiment, the processor 10 sets the cancellation flag F1 to "1" in ACT 87. That is, the processor 10 waits for input of an instruction as to whether to maintain or cancel the additional registration in ACT 89 and ACT 90 after performing the process of canceling the additionally registered sales data. Thus, in the case where the frequency is high that a store clerk additionally registers a product other than registration targets by mistake after a subtotal is output, the additional product registration after the output of a subtotal can be handled efficiently.

### [Modifications]

The embodiments described above exemplify a product registration apparatus having a registration function and an accounting function. The product registration apparatus is not limited thereto. The product registration apparatus may be a register of a semi-self-service checkout system in which a registration machine having a registration function and an accounting machine having an accounting function are separated so that the registration machine is operated by a store clerk and the accounting machine is operated by a customer.

The embodiments described above show a strike-through as an example of the information indicating execution of cancellation. The information indicating execution of cancellation is not limited to a strike-through. Any information may be used as long as it allows the operator to recognize execution of cancellation.

The display device of the product registration apparatus 1 is not limited to the touch panel 17. A liquid crystal display or the like that does not include a touch sensor may be used as the display device. It is needless to say that, in this case, an input device such as a keyboard or a pointing device is required.

The program according to the embodiments may be provided in the state of being stored in an electronic device or provided in the state of not being stored in an electronic device. In the latter case, the program may be provided over a network or provided in the state of being recorded on a recording medium. The recording medium is a non-transitory tangible medium. The recording medium is a computer-readable medium. The recording medium may be any form of medium that is capable of storing a program and is readable by a computer, such as a CD-ROM or a memory card.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope of the inventions.

## Claims

1. A product registration apparatus comprising:
a reception unit configured to receive product registration after output of a subtotal;
an addition unit configured to add sales data of a product for which registration is received by the reception unit to sales data of a product for which the subtotal is output;
a cancellation unit configured to cancel the sales data of the product added by the addition unit; and
a determination unit configured to wait for an instruction of whether or not to permit the product registration received after the output of the subtotal, determine the addition of the sales data performed by the addition unit in a case where the determination unit receives an instruction to permit the product registration, and determine the cancellation of the sales data performed by the cancellation unit in a case where the determination unit receives an instruction not to permit the product registration.

2. The product registration apparatus according to claim 1, wherein the determination unit is configured to wait for an instruction as to whether or not to permit the product registration after the sales data is added by the addition unit.

3. The product registration apparatus according to claim 1, wherein the determination unit is configured to wait for an instruction as to whether or not to permit the product registration after the sales data is canceled by the cancellation unit.

4. The product registration apparatus according to claim 1, wherein the determination unit is configured to control a display device to display a screen on which a first operating element for instructing to permit the product registration and a second operating element for instructing not to permit the product registration are arranged, and wait for an instruction as to whether or not to permit the product registration.

5. The product registration apparatus according to claim 1, further comprising a notification unit configured to notify cancellation of the sales data when the cancellation of the sales data is determined by the determination unit.

6. A product registration method comprising:
receiving product registration after output of a subtotal;
adding sales data of a product for which registration is received to sales data of a product for which the subtotal is output;
canceling the added sales data of the product; and
waiting for an instruction of whether or not to permit the product registration received after the output of the subtotal, determining the addition of the sales data in a case where an instruction to permit the product registration is received, and determining the cancellation of the sales data in a case where an instruction not to permit the product registration is received.

7. A program recording medium having recorded thereon a program for causing a computer of a product registration apparatus configured to register a product to implement:
a reception function of receiving product registration after a subtotal is output;
an addition function of adding sales data of the product for which registration is received by the reception function to sales data of a product for which the subtotal is output;
a cancellation function of canceling the sales data of the product added by the addition function; and
a determination function of waiting for an instruction of whether or not to permit the product registration received after the output of the subtotal, determining the addition of the sales data performed by the addition function in a case where an instruction to permit the product registration is received, and determining the cancellation of the sales data performed by the cancellation function in a case where an instruction not to permit the product registration is received.
